# EUROPEAN PATENT APPLICATION

(11) **EP 3 216 683 A1**
(43) Date of publication of application: **13.09.2017**
(21) Application number: 16159749.7
(22) Date of filing: 10.03.2016
(51) Int. Cl.: B62K 25/02

(54) **ADJUSTABLE BICYCLE HANDLEBAR**

(71) Applicant: Lin, Chang Hui, Changhu (TW)
(72) Inventor: Lin, Chang Hui, Changhu (TW)
(74) Representative: Cabinet Chaillot

(57) **Abstract**

An adjustable bicycle handlebar contains: a body (20), a central shaft (30), a connecting rod (40), a plurality of steel balls (80), and multiple springs (81), a returning spring (85), an adjusting sleeve (50), and a screw nut (90). The body (20) includes a spherical knob (21), a groove (22), an eccentric hole (23), a pull stem (24), and a coupling peg (25), wherein the coupling peg (25) has a threaded hole (251) for screwing with external threads (311) of an extension (31) of the central shaft (30), and the extension (31) has a raised portion (32) and a peripheral rib (33), the raised portion (32) has a plurality of recesses (321). The connecting rod (40) is a hollow tube (41) and includes a first screwing section (411) and a first orifice (42) having a second orifice (43), and a first shoulder (421) is formed on a connection portion of the second orifice (43) and the first orifice (42), the second orifice (43) has a third orifice (44).

## Description

### BACKGROUND OF THE INVENTION

### Field of the Invention

The present invention relates to a bicycle handlebar in which internal threads of a trench are screwed with or are removed from a second screwing section of an adjustment cap so as to adjust a tightness of the body, after pulling the body outwardly.

### Description of the Prior Art

A conventional bicycle handlebar is rotated tightly to contact with a front fork or a rear fork, wherein a pull extension is pushed so that an angle between a connecting rod and the pull extension is 180 degrees, and a body of the bicycle handlebar is rotated to drive the connecting rod to force a screw nut, thereafter the pull extension is pushed to retain with the connecting rod. However, the pull extension is stopped by a front fork or a rear fork that cannot retain with the connecting rod securely. To overcome such a problem, the pull extension is pushed so that the angle between the connecting rod and the pull extension is 180 degrees, and the pull extension is rotated toward a predetermined angle so as to release the connecting rod, hence the pull extension shrinks the front fork or the rear fork and is pushed tightly to retain with the connecting rod, but such an operation causes an incomplete tightness of the pull extension and the connecting rod.

The present invention has arisen to mitigate and/or obviate the afore-described disadvantages of the conventional adjustable bicycle handlebars.

### SUMMARY OF THE INVENTION

The primary objective of the present invention is to provide a bicycle handlebar in which internal threads of a trench are screwed with or are removed from a second screwing section of an adjustment cap so as to adjust a tightness of the body, after pulling the body outwardly.

In accordance with one aspect of the invention, there is provided a bicycle handlebar contains: a body, a central shaft, a connecting rod, a plurality of steel balls, and multiple springs, a returning spring, an adjusting sleeve, and a screw nut.

The body includes a spherical knob, a groove defined on a peripheral side of the spherical knob, an eccentric hole formed on one end of the spherical knob and communicating with the groove, a pull stem extending outwardly from the spherical knob, and a coupling peg rotatably connected with the eccentric hole, wherein the coupling peg has a threaded hole defined thereon and configured to screw with external threads of an extension of the central shaft, and the extension has a raised portion arranged on a middle section thereof and has a peripheral rib formed on a rear end thereof, wherein the raised portion has a plurality of recesses arranged thereon.

The connecting rod is a hollow tube, and the hollow tube includes a first screwing section formed thereon so as to screw with the screw nut, the hollow tube also includes a first orifice defined on a central position thereof, and the first orifice has a second orifice formed therein and in a front end of the hollow tube, wherein a diameter of the first orifice is more than the second orifice, and a first shoulder is formed on a connection portion of the second orifice and the first orifice, the second orifice has a third orifice defined in a front end thereof and its diameter is more than the third orifice, the hollow tube further includes a locking head, a diameter of which is more than the hollow tube, and a second shoulder is formed on a connection portion of a rear end of the locking head and the hollow tube, the locking head has a plurality of fourth orifice arranged on an outer wall thereof and communicating with the second orifice, wherein the plurality of fourth orifices accommodate the plurality of steel balls respectively and the multiple springs, the returning spring is accommodated between the peripheral rib and the first shoulder, the adjusting sleeve is mounted on the second shoulder of the locking head, the adjusting sleeve includes an adjustment cap, a first fixing pad, and a second fixing pad which are fixed on a front end of the adjusting sleeve, the adjusting sleeve further includes a first opening defined on a central position thereof, a trench formed on a central position thereof behind the first opening so as to house a spacer, wherein the trench has internal threads formed thereon, and the first fixing pad and the second fixing pad are located on a front end of the adjustment cap.

Further objectives and advantages of the present invention will become apparent from a careful reading of the detailed description provided hereinbelow, with appropriate reference to the accompanying drawings.

### BRIEF DESCRIPTION OF THE DRAWINGS

FIG. 1 is a perspective view showing the exploded components of an adjustable bicycle handlebar according to a preferred embodiment of the present invention.
FIG. 2 is a perspective view showing the assembly of the adjustable bicycle handlebar according to the preferred embodiment of the present invention.
FIG. 3 is a cross sectional view showing the assembly of the adjustable bicycle handlebar according to the preferred embodiment of the present invention.
FIG. 4 is a cross sectional view showing the operation of the adjustable bicycle handlebar according to the preferred embodiment of the present invention.
FIG. 5 is a side plan view showing the operation of the adjustable bicycle handlebar according to the preferred embodiment of the present invention.
FIG. 6 is another side plan view showing the operation of the adjustable bicycle handlebar according to the preferred embodiment of the present invention.

### DETAILED DESCRIPTION OF THE PREFERRED EMBODIMENTS

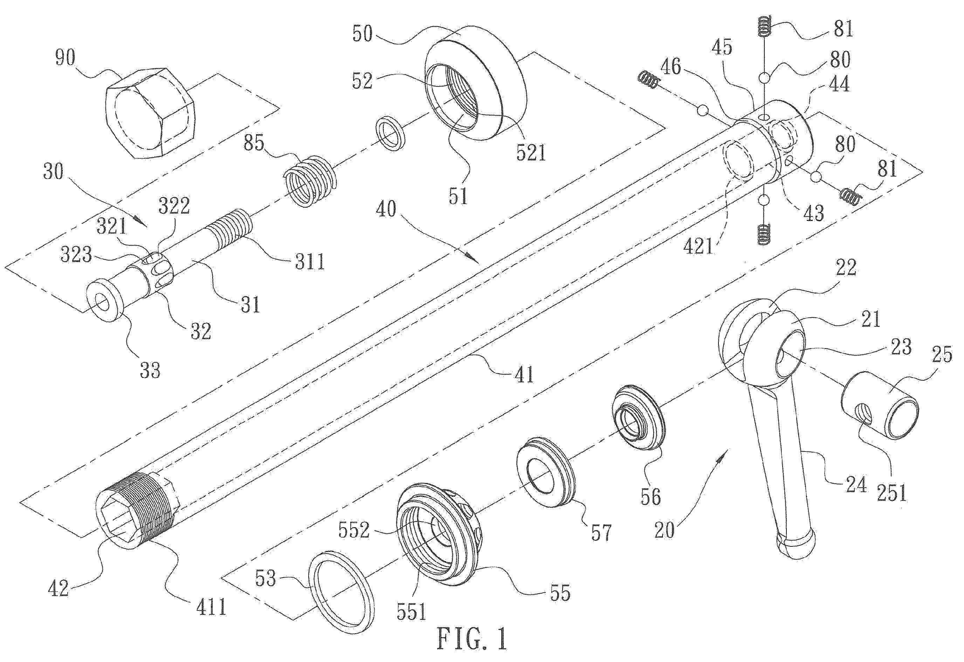

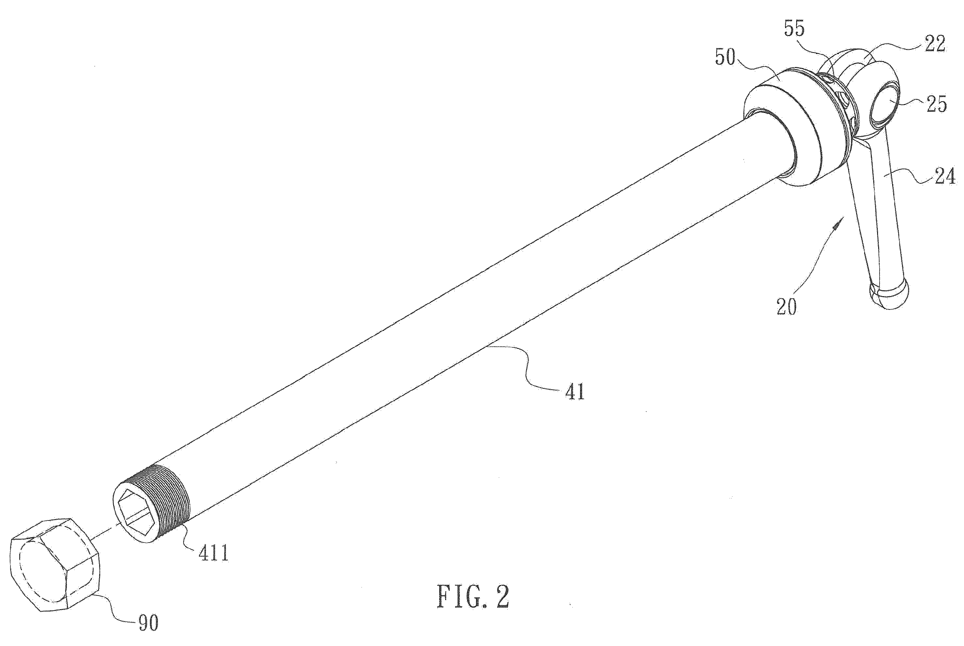

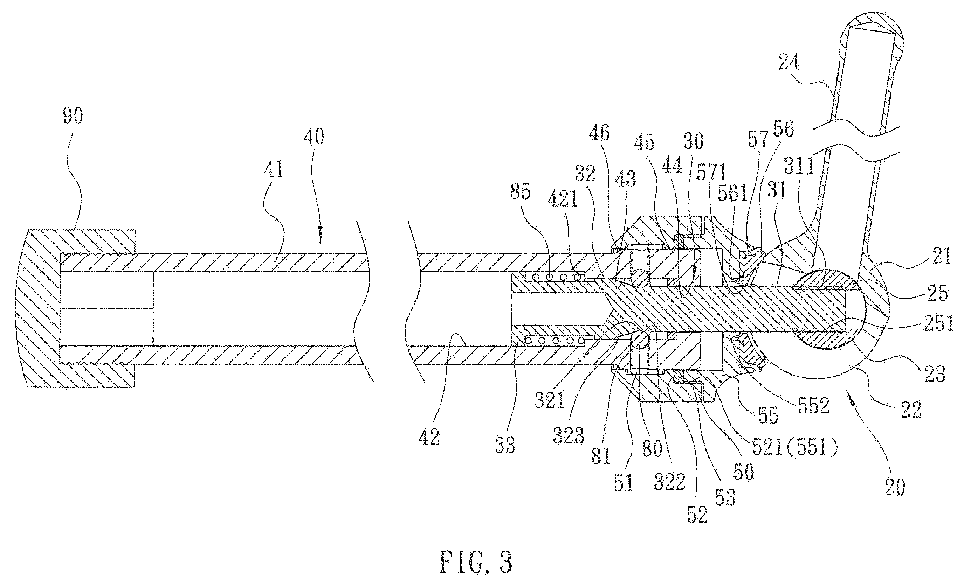

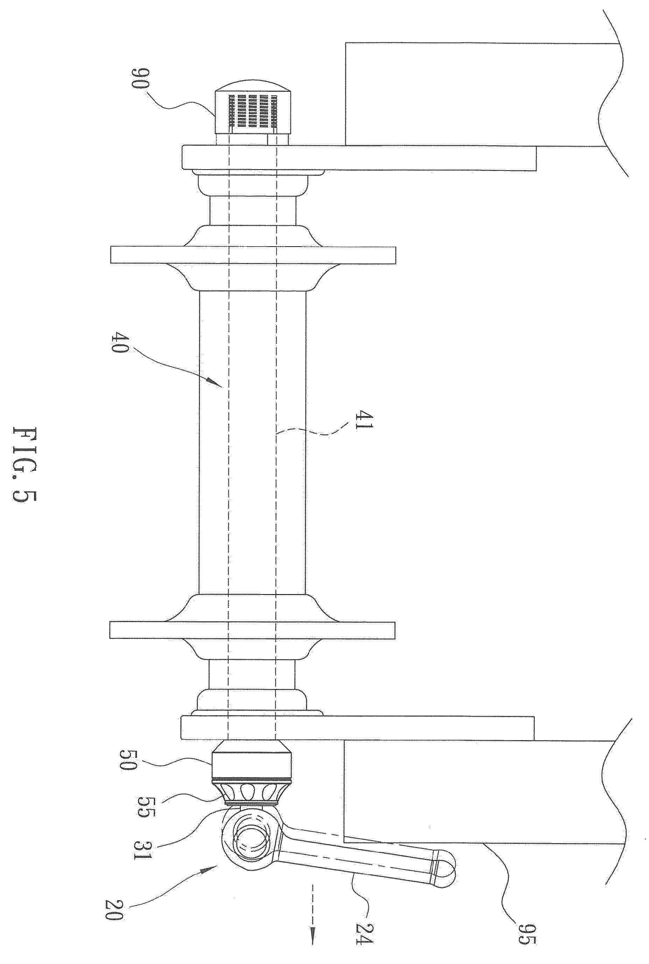

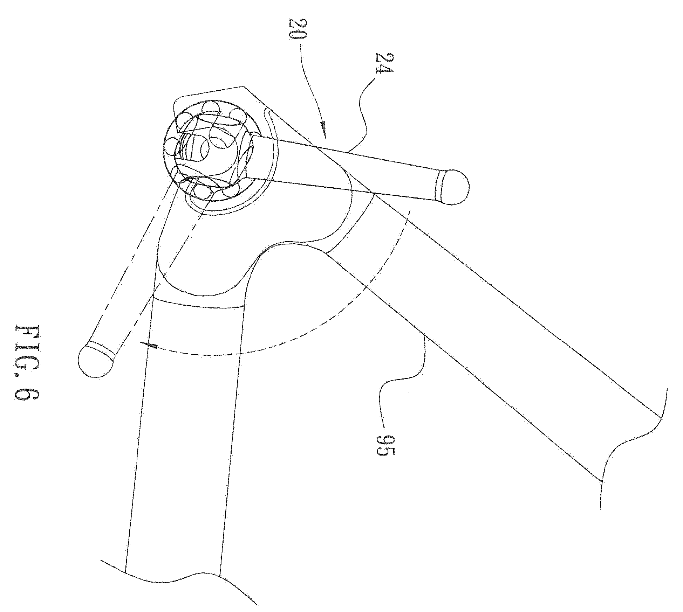

Referring to the drawings, and initially to FIGS. 1-6, an adjustable bicycle handlebar according to a preferred embodiment of the present invention comprises: a body 20, a central shaft 30, a connecting rod 40, a plurality of steel balls 80, and multiple springs 81, a returning spring 85, an adjusting sleeve 50, and a screw nut 90.

The body 20 includes a spherical knob 21, a groove 22 defined on a peripheral side of the spherical knob 21, an eccentric hole 23 formed on one end of the spherical knob 21 and communicating with the groove 22, a pull stem 24 extending outwardly from the spherical knob 21, and a coupling peg 25 rotatably connected with the eccentric hole 23, wherein the coupling peg 25 has a threaded hole 251 defined thereon and configured to screw with external threads 311 of an extension 31 of the central shaft 30, and the extension 31 has a raised portion 32 arranged on a middle section thereof and has a peripheral rib 33 formed on a rear end thereof, wherein the raised portion 32 has a plurality of recesses 321 arranged thereon, multiple deep indentations 322 formed on front ends of the plurality of recesses 321 respectively, and multiple shallow indentations 323 defined on rear ends of the plurality of recesses 321, individually.

The connecting rod 40 is a hollow tube 41, and the hollow tube 41 includes a first screwing section 411 formed thereon so as to screw with the screw nut 90, the hollow tube 41 also includes a first orifice 42 defined on a central position thereof, and the first orifice 42 has a second orifice 43 formed therein and in a front end of the hollow tube 41, wherein a diameter of the first orifice 42 is more than the second orifice 43, and a first shoulder 421 is formed on a connection portion of the second orifice 43 and the first orifice 42. The second orifice 43 has a third orifice 44 defined in a front end thereof and its diameter is more than the third orifice 44, the hollow tube 41 further includes a locking head 45, a diameter of which is more than the hollow tube 41, and a second shoulder 46 is formed on a connection portion of a rear end of the locking head 45 and the hollow tube 41, the locking head 45 has a plurality of fourth orifice 451 arranged on an outer wall thereof and communicating with the second orifice 43, wherein the plurality of fourth orifices 451 accommodate the plurality of steel balls 80 respectively and the multiple springs 81, the returning spring 85 is fitted on the central shaft 30, and the central shaft 30 is inserted into the first orifice 42, such that the raised portion 32 of the central shaft 30 is housed in the second orifice 43, the extension 31 of the central shaft 30 extends out of the third orifice 44 so as to screw with the threaded hole 251 of the coupling peg 25, the returning spring 85 is accommodated between the peripheral rib 33 and the first shoulder 421, the adjusting sleeve 50 is mounted on the second shoulder 46 of the locking head 45.

The adjusting sleeve 50 includes an adjustment cap 55, a first fixing pad 56, and a second fixing pad 57 which are fixed on a front end of the adjusting sleeve 50, the adjusting sleeve 50 further includes a first opening 51 defined on a central position thereof, a trench 52 formed on a central position thereof behind the first opening 51 so as to house a spacer 53, wherein the trench 52 has internal threads 521 formed thereon, the first fixing pad 56 and the second fixing pad 57 are located on a front end of the adjustment cap 55, the adjustment cap 55 has a second opening 52 formed on a central position thereof. In addition, the first fixing pad 56 has a third opening 552 formed on a central position thereof, the second fixing pad 57 has a fourth opening 571 arranged on a central position thereof, and the adjustment cap 55 has a second screwing section 551 formed on a bottom thereof so as to screw with the internal threads 521 of the trench 52.

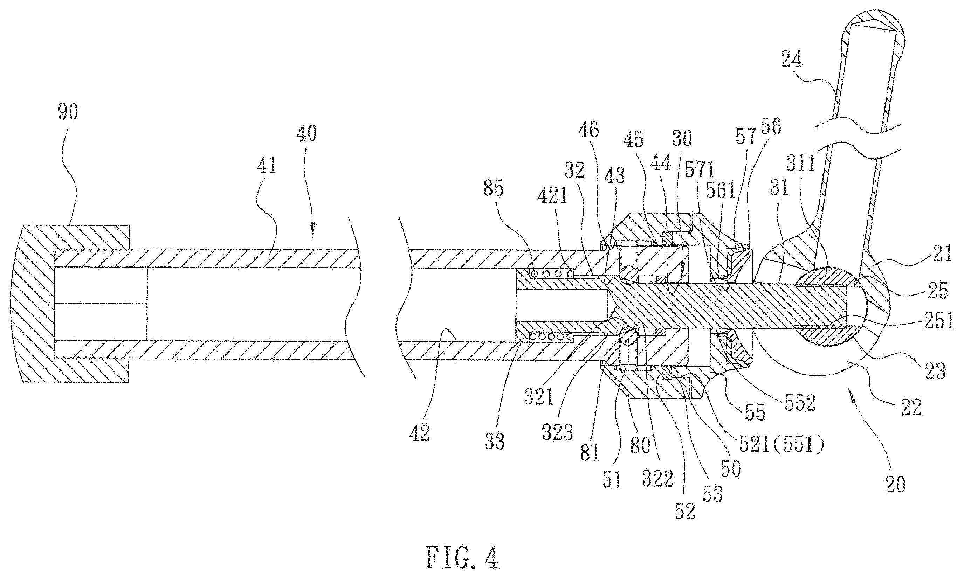

Referring to FIGS. 4 to 6, after the body 20 is rotated tightly to contact with a front fork 95 or a rear fork 96, it is pulled outwardly and is rotated toward a desired angle and is released so that the returning spring 85 pushes the body 20 back to an original position. Thereafter, the body 20 is rotated continuously and the pull stem 24 is pulled outwardly to drive the central shaft 30, hence the plurality of steel balls 80 move into the multiple shallow indentations 323 from the multiple deep indentations 322 individually, in the meantime, the pull stem 24 is rotatably adjusted to shirk the front fork 95 or the rear fork 96, and the plurality of steel balls 80 rotate in the multiple shallow indentations 323 respectively so as to urge a rotation of the connecting rod 40. Preferably, when the pull stem 24 is pulled outwardly and is rotated, it drives the connecting rod 40 to force the screw nut 90 tightly, and the internal threads 521 of the trench 52 are screwed with or are removed from the second screwing section 551 of the adjustment cap 55 so as to adjust a tightness of the body 20, after pulling the body 20 outwardly.

Although this invention has been described with a certain degree of particularity, it is to be understood that the present disclosure has been made by way of example only and that numerous changes in the detailed construction and the combination and arrangement of parts may be resorted to without departing from the spirit and scope of the invention as hereinafter claimed.

## Claims

1. An adjustable bicycle handlebar comprising:
a body (20), a central shaft (30), a connecting rod (40), a plurality of steel balls (80), and multiple springs (81), a returning spring (85), an adjusting sleeve (50), and a screw nut (90);
**characterized in that**
the body (20) includes a spherical knob (21), a groove (22) defined on a peripheral side of the spherical knob (21), an eccentric hole (23) formed on one end of the spherical knob (21) and communicating with the groove (22), a pull stem (24) extending outwardly from the spherical knob (21), and a coupling peg (25) rotatably connected with the eccentric hole (23), wherein the coupling peg (25) has a threaded hole (251) defined thereon and configured to screw with external threads (311) of an extension (31) of the central shaft (30), and the extension (31) has a raised portion (32) arranged on a middle section thereof and has a peripheral rib (33) formed on a rear end thereof, wherein the raised portion (32) has a plurality of recesses (321) arranged thereon;
the connecting rod (40) is a hollow tube (41), and the hollow tube (41) includes a first screwing section (411) formed thereon so as to screw with the screw nut (90), the hollow tube (41) also includes a first orifice (42) defined on a central position thereof, and the first orifice (42) has a second orifice (43) formed therein and in a front end of the hollow tube (41), wherein a diameter of the first orifice (42) is more than the second orifice (43), and a first shoulder (421) is formed on a connection portion of the second orifice (43) and the first orifice (42), the second orifice (43) has a third orifice (44) defined in a front end thereof and its diameter is more than the third orifice (44), the hollow tube (41) further includes a locking head (45), a diameter of which is more than the hollow tube (41), and a second shoulder (46) is formed on a connection portion of a rear end of the locking head (45) and the hollow tube (41), the locking head (45) has a plurality of fourth orifice (451) arranged on an outer wall thereof and communicating with the second orifice (43), wherein the plurality of fourth orifices (451) accommodate the plurality of steel balls (80) respectively and the multiple springs (81), the returning spring (85) is accommodated between the peripheral rib (33) and the first shoulder (421), the adjusting sleeve (50) is mounted on the second shoulder (46) of the locking head (45), the adjusting sleeve (50) includes an adjustment cap (55), a first fixing pad (56), and a second fixing pad (57) which are fixed on a front end of the adjusting sleeve (50), the adjusting sleeve (50) further includes a first opening (51) defined on a central position thereof, a trench (52) formed on a central position thereof behind the first opening (51) so as to house a spacer (53), wherein the trench (52) has internal threads (521) formed thereon, and the first fixing pad (56) and the second fixing pad (57) are located on a front end of the adjustment cap (55).

2. The bicycle handlebar as claimed in claim 1, **characterized in that** the returning spring (85) is fitted on the central shaft (30), and the central shaft (30) is inserted into the first orifice (42).

3. The bicycle handlebar as claimed in claim 1, **characterized in that** the raised portion (32) of the central shaft (30) is housed in the second orifice (43), and the extension (31) of the central shaft (30) extends out of the third orifice (44) so as to screw with the threaded hole (251) of the coupling peg (25).

4. The bicycle handlebar as claimed in claim 1, wherein the raised portion (32) has multiple deep indentations (322) formed on front ends of the plurality of recesses (321) respectively and has multiple shallow indentations (323) defined on rear ends of the plurality of recesses (321), individually.

5. The bicycle handlebar as claimed in claim 1, **characterized in that** the internal threads (521) of the trench (52) are screwed with or are removed from the second screwing section (551) of the adjustment cap (55) so as to adjust a tightness of the body (20), after pulling the body (20) outwardly.

6. The bicycle handlebar as claimed in claim 1, **characterized in that** the adjustment cap (55) has a second opening (52) formed on a central position thereof, the first fixing pad (56) has a third opening (552) formed on a central position thereof, and the second fixing pad (57) has a fourth opening (571) arranged on a central position thereof.
